# EUROPÄISCHE PATENTSCHRIFT

(11) **EP 2 018 320 B1**
(45) Veröffentlichungstag und Bekanntmachung des Hinweises auf die Patenterteilung: **26.02.2014**
(21) Anmeldenummer: 08759492.5
(22) Anmeldetag: 09.05.2008
(51) Int. Cl.: C08G 101/00, C08G 18/66, B60N 2/70, B64D 11/06

(54) **FLAMMHEMMENDER SITZ, INSBESONDERE FLUGGASTSITZ**
FLAME-RESISTANT SEAT, PARTICULARLY AIR PASSENGER SEAT
SIEGE IGNIFUGE, NOTAMMENT SIEGE D'AERONEF

(30) Priorität: 11.05.2007 DE 102007022157
(43) Veröffentlichungstag der Anmeldung: 28.01.2009
(60) Teilanmeldung: 11189214.7
(73) Patentinhaber: Metzeler Schaum GmbH, 87700 Memmingen (DE)
(72) Erfinder: BAUER, Andreas, 87766 Memmingerberg (DE); HEITMANN, Ulrich, 87700 Memmingen (DE); HOHENHORST, Manfred, 88430 Rot an der Rot (DE); KOELMAN, Frank, 87700 Memmingen (DE)
(74) Vertreter: Schober, Christoph D.
(86) Internationale Anmeldenummer: PCT/EP2008/055759
(87) Internationale Veröffentlichungsnummer: WO 2008/138893

(56) Entgegenhaltungen:
- EP-A- 0 262 527
- DE-A1- 10 047 024
- GB-A- 2 428 677
- US-A1- 2006 276 609

## Beschreibung

Die vorliegende Erfindung betrifft einen flammhemmenden Sitz, insbesondere einen Fluggastsitz, der mit einem Rückenteil und einem Sitzteil versehen ist. Das Rückenteil und/oder das Sitzteil weisen eine Komponente aus einem Weichschaumstoff auf. Der Weichschaumstoff ist aus einem Reaktionsgemisch geschäumt, das Polyol, Wasser, Isocyanat, ein flammhemmendes Mittel und einen Katalysator umfasst.

Im Stand der Technik sind zur Personenbeförderung geeignete Sitze bekannt, bei denen das Rückenteil und das Sitzteil aus Teilen gebildet sind, die, je nach Transportmittel und Einsatzzweck, individuell anpassbare Eigenschaften aufweisen. Häufig sind solche Teile aus einem Polsterkern und einer den Polsterkern umfassenden Hülle aufgebaut. Die Hülle ist aus Materialien gebildet, die die Möglichkeit einer ansprechenden optischen Gestaltung bieten, wohingegen der im Allgemeinen aus Schaumstoff bestehende Polsterkern hauptsächlich der Polsterung und Federung des Sitzes dient, um dem Passagier ein komfortables Sitzen zu ermöglichen. Weitere gewünschte Eigenschaften eines solchen Sitzes können Flammfestigkeit, Wasserfestigkeit oder eine schmutzabweisende Oberfläche sein.

Die zur Herstellung vom Schaumstoff verwendeten Ausgangsstoffe werden heutzutage aus Mineralölen gewonnen. Die Ausgangsstoffe werden durch Polymerisation und Aufschäumen zu Schaumstoff verarbeitet.

Bei der Verarbeitung von Mineralölen zu Ausgangstoffen für die Polymerisation, wie zum Beispiel Polyol, entsteht eine nicht unerhebliche Umweltbelastung. Die aus Raffination und der weiteren Verfeinerung entstehenden Abfallprodukte müssen aufwendig vernichtet oder in Mülldeponien gelagert werden. Dies führt zu einem hohen Entsorgungsaufwand und damit zu hohen Produktionskosten.

Aus der JP 2006/104404 A ist ein Polyurethankissen für einen Fahrzeugsitz bekannt. Das Kissen weist einen hohen Anteil eines natürlichen Rohmaterials auf. Das Rohmaterial kann insbesondere aus Rizinusöl gebildet sein.

Einen Urethanschaum für einen Kraftfahrzeugsitz, der aus einem Rohmaterial pflanzlicher Herkunft hergestellt ist, offenbart die JP 2005/320437 A. Das zur Herstellung verwendete Polyol weist Pflanzenöl und Pflanzenfett auf, dem wenigsten ein Molekül eines Alkylenoxids beigefügt ist.

Die EP 0 450 403 B1 beschreibt ein Verfahren zur Herstellung eines flammwidrigen, elastischen Polyurethanweichschaumstoffs. Dieser Weichschaumstoff wird aus einem Schaumstoffreaktionsgemisch hergestellt, dem neben Polyol und Polyisocyanat ein Anteil an Blähgraphit und Melamin zugegeben wird.

Dokument DE 100 47 024 A1, welches den nächstliegenden Stand der Technik darstellt, offenbart einen flammhemmenden Sitz welcher eine Komponente aus Weichschaum aufweist, wobei der Weichschaum aus einem Reaktionsgemisch geschäumt ist, das Polyol, Wasser, Isocyanat, ein flammhemmendes Mittel und einen Katalysator umfasst.

Der Erfindung liegt die Aufgabe zugrunde, einen Sitz und ein Verfahren zum Herstellen eines Sitzes zu schaffen, die sowohl ökonomischen als auch ökologischen Anforderungen genügen.

Zur Lösung dieser Aufgabe wird ein flammhemmender Sitz gemäß einem der Ansprüche 1 bis 4 und ein Verfahren zum Herstellen eines solchen Sitzes nach einem der Ansprüche 10 bis 13 vorgeschlagen. Bevorzugte Ausgestaltungen der Erfindung sind Gegenstand der Ansprüche 5 bis 9 und 14.

Der erfindungsgemäße Sitz hat den Vorteil, dass seine Herstellung auf der Basis von nachwachsenden Rohstoffen erfolgt und damit sowohl eine ökologische, als auch eine, insbesondere im Hinblick auf steigende Preise von Mineralölen, kostengünstige Herstellung sicherstellt. Denn es ist absehbar, dass zukünftig Mineralöl nicht mehr in großen Mengen für die Herstellung von Schaumstoffen verfügbar sein wird. Dies wird den Preis für herkömmliche Ausgangsstoffe zur Schaumstofferzeugung in die Höhe treiben. Überdies wird unter Umständen zukünftig eine ausreichende Produktion von Schaumstoffen aufgrund einer Verknappung von Mineralöl nicht mehr gewährleistet werden können.

Der erfindungsgemäße Sitz ist in besonderem Maße geeignet, als Fluggastsitz eingesetzt zu werden. Der Sitz eignet sich jedoch auch für andere Einsatzzwecke und kann insbesondere auch als Passagiersitz für Eisenbahnen oder Schiffe eingesetzt werden.

Das erfindungsgemäße Verfahren hat den Vorteil, dass als Rohstoff ein preiswert erzeugbares und umweltschonendes Pflanzenöl verwendet wird.

Der Anteil an Pflanzenöl in dem Polyol liegt bevorzugt zwischen ca. 1 Gew.-% und 100 Gew.-% und insbesondere zwischen ca. 1 Gew.-% und 50 Gew.-%. Weiter bevorzugt liegt der Anteil an Pflanzenöl in dem Polyol zwischen ca. 1 Gew.-% und 35 Gew.-%.

Das Pflanzenöl wird aus nachwachsenden Rohstoffen gewonnen. Dies ist insbesondere vorteilhaft, da nachwachsende Rohstoffe in größerer Menge über einen langen Zeitraum verfügbar sind. Um auf besonders kostengünstige Rohstoffe zurückgreifen zu können, wird ein Pflanzenöl, das aus Raps, Sonnenblumen, Soja, Reis oder Weizen gewonnen wurde, verwendet.

Erfindungsgemäß umfasst das Reaktionsgemisch Graphit. Dies bewirkt eine flammhemmende Wirkung des Schaumstoffs. Das flammenhemmende Mittel kann weitere Bestandteile, wie zum Beispiel Melamin enthalten. Ein Verfahren zur Herstellung eines mit einem solchen flammhemmenden Mittel versehenden Weichschaumstoffs wird zum Beispiel in der EP 0 450 403 B1 beschrieben.

Das Reaktionsgemisch weist erfindungsgemäß einen Stabilisator auf.

In einer besonders bevorzugten Ausführungsform hat der Weichschaumstoff ein Raumgewicht zwischen ca. 20 kg/m³ und 80 kg/m³, mehr bevorzugt zwischen ca. 40 kg/m³ und 60 kg/m³. Damit ist gewährleistet, dass das Gewicht des Sitzes, insbesondere bei Verwendung als Fluggastsitz, gering bleibt.

Die Stauchhärte des vorzugsweise als Formschaum erzeugten Weichschaumstoffs nach DIN EN ISO 3386 liegt zweckmäßigerweise zwischen ca. 2 kPa und 10 kPa, weiter bevorzugt zwischen ca. 4 kPa und 7 kPa. Dies hatden Vorteil, dass einem Passagier ein komfortables Sitzen ermöglicht wird, bei dem Sitz weder zu hart noch zu weich ist.

Vorteilhaft kann die aus Weichschaumstoff bestehende Komponente ein Polsterkern sein.

Nachfolgend wird die Erfindung anhand eines Ausführungsbeispiels beschrieben, das in der Zeichnung schematisch dargestellt ist. Dabei zeigen:
- Fig. 1: eine perspektivische Ansicht des erfindungsgemäßen Sitzes;
- Fig. 2: eine Explosionszeichnung des Sitzes gemäß Fig. 1 und
- Fig. 3: einen Querschnitt durch ein Sitzteil des Sitzes gemäß Fig. 1.

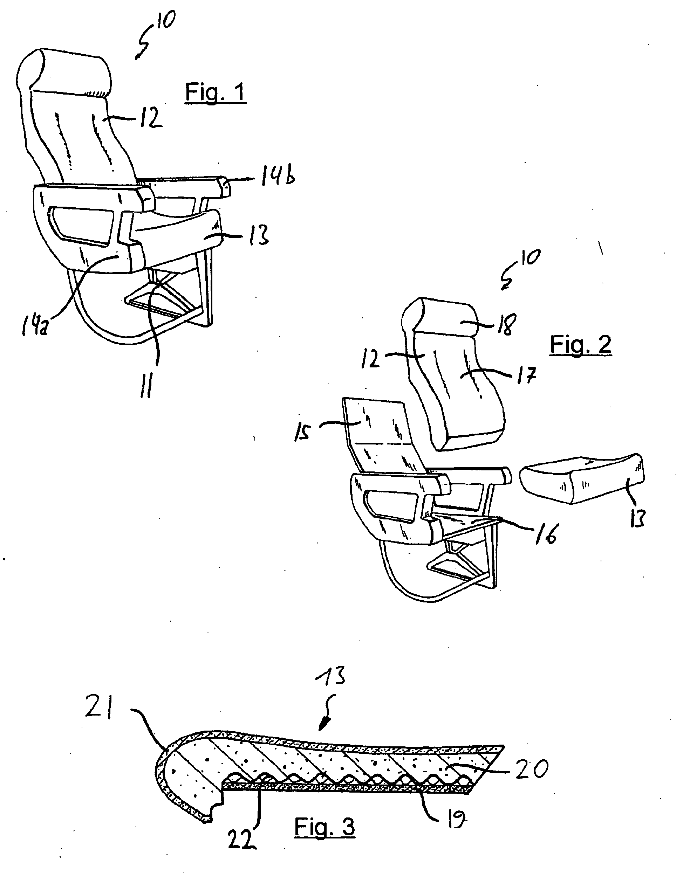

Fig. 1 und 2 zeigen einen Sitz 10, der mehrteilig aus einem Gestell 11, einem Rückenteil 12 und einem Sitzteil 13 aufgebaut ist. Das Gestell 11 hat zwei Armlehnen bildende Seitenteile 14a, 14b, zwischen denen Auflageflächen 15, 16 für das Rückenteil 12 und das Sitzteil 13 angeordnet sind. In diesem Ausführungsbeispiel ist das Gestell 11 aus einem Leichtmetall, insbesondere aus Aluminium, gefertigt.

Das Rückenteil 12 weist einen ergonomisch geformten Rückenabschnitt 17 und eine sich im oberen Bereich des Rückenabschnitts 17 an diesen anschließende Kopfstütze 18 auf. Das Gestell 11 hat Haltevorrichtungen für das Rückenteil 12 und das Sitzteil 13, die das Gestell 11 mit dem Rückenteil 12 und dem Sitzteil 13 lösbar verbinden. Sind das Rückenteil 12 und/oder das Sitzteil 13 abgenutzt oder verunreinigt, so ist es durch Lösen dieser Verbindung möglich, das abgenutzte Teil auszutauschen.

Wie Fig. 3 zu erkennen gibt, weist das Sitzteil 13 einen Befestigungsabschnitt 19 auf, der zur Befestigung an der Auflagefläche 16 dient. Der Befestigungsabschnitt 19 ist aus einem steifen, leichten Material, das beispielsweise aus einem Polymer-Blockschaum besteht, gebildet. Zur Befestigung an der Auflagefläche 16 ist der Befestigungsabschnitt 19 mit Ausschnitten versehen, in die Vorsprünge der Auflagefläche 16 eingreifen. Eine weitere Möglichkeit, das Sitzteil 13 an der Auflagefläche 16 zu befestigen, ist die Anbringung von Klettverschlüssen an der Auflagefläche 16 und dem Sitzteil 13.

Weiterhin hat das Sitzteil 13 einen Polsterkern 20, der der Sitzfläche Stabilität gibt und dem Passagier ein komfortables, gepolstertes Sitzen ermöglicht. Der Polsterkern 20 ist in dem vorliegenden Ausführungsbeispiel aus einem Polyester- oder Polyurethanweichschaumstoff gebildet. Ein solcher Weichschaumstoff hat ein geringes Gewicht und verbessert damit die Treibstoffökonomie eines Flugzeugs, in das er eingebaut ist. Gleichzeitig ist er strapazierfähig und hat eine sitzgerechte Stauchhärte von zum Beispiel zwischen 4 kPa und 8 kPa.

Der Polsterkern 20 weist an seiner Unterseite eine Noppenstruktur 22 auf, die der verbesserten Belüftung der Unterseite dient. Damit wird erreicht, dass sich Feuchtigkeit nicht in dem Polsterkern 20 festsetzen kann. Bei jedem Passagierkontakt werden die Noppenstruktur 22 und der Polsterkern 20 komprimiert und damit gleichzeitig belüftet. Dadurch werden Gerüche und Schimmel vermieden.

Zur einfachen optischen Gestaltung des Sitzes 10 ist der Polsterkern 20 passagierseitig mit einem Bezug 21 überzogen, der einen Polyurethanweichschaumstoff umfasst und leicht bedruckbar ist. Weiter ist der Bezug 21 schmutz- und wasserabweisend ausgebildet.

Der Befestigungsabschnitt 19, der Polsterkern 20 und der Bezug 21 sind mit-einander verklebt. Andere Möglichkeiten der Befestigung, wie zum Beispiel vernähen, sind denkbar.

Der Bezug 21 und der Polsterkern 20 weisen ein flammhemmendes Mittel auf. So kann dem Bezug 21 roter Phosphor beigemengt sein, der unter Hitzeeinwirkung mit Luftsauerstoff und Restwasser verkohlt und eine Schutzschicht gegen die Ausbreitung der Flammen bildet. Es kann ebenfalls Blähgraphitschaum zur Brandhemmung eingesetzt werden.

Der zum Beispiel für den Polsterkern 20 verwendete Schaumstoff wird durch einen Polymerisationsvorgang erzeugt. Dabei werden als Ausgangstoffe ein Polyisocyanat und ein Polyolgemisch verwendet. Das Polyisocyanat und das Polyolgemisch reagieren und bilden langkettige Moleküle, in denen sich jeweils Urethanabschnitte mit Überresten des Polyols abwechseln. Um dieses Polyurethan aufzuschäumen, werden einem Reaktionsgemisch Additive beigegeben. Eine einfache Möglichkeit, ein Polyurethan aufzuschäumen, besteht darin, dem Reaktionsgemisch Wasser beizugeben. Dies bewirkt die Bildung von CO₂, das das entstehende Polyurethan aufschäumt. Durch Dosierung der Wassermenge ist das Raumgewicht des entstehenden Polyurethanschaums beeinflussbar.

Als Polyol sind grundsätzlich viele Polyalkohole geeignet. Häufig werden Ethylenglykol oder Propylenglykol verwendet. Die Eigenschaften des fertigen Polymers werden von den verwendeten Ausgangsstoffen, insbesondere des verwendeten Polyols bestimmt. Durch eine Mischung verschiedener Polyalkohole in den Ausgangsstoffen können die Eigenschaften des Polymers fein eingestellt werden.

In der folgenden Tabelle sind vier Reaktionsgemische (R1, R2, R3, R4) von Ausgangstoffen zur Herstellung von in dem Sitz 10 verwendeten Schaumstoffen angegeben:

**Tabelle 1**

| **Rezeptur** | **R1** | **R2** | **R3** | **R4** |
|---|---|---|---|---|
| Polyol 1 | 20 | 20 | 20 | 0 |
| Polyol 2 | 70 | 60 | 20 | 0 |
| Polyol 3 | 10 | 20 | 60 | 100 |
| Wasser | 3,2 | 3,2 | 3,2 | 3,2 |
| Katalysator 1 | 0,3 | 0,3 | 0,3 | 0,4 |
| Katalysator 2 | 0,8 | 0,8 | 0,8 | 0,8 |
| Katalysator 3 | 0,5 | 0,5 | 0,5 | 0,7 |
| Flammschutz | 5 | 5 | 5 | 5 |
| Blähgraphit | 35 | 45 | 35 | 35 |
| Stabilisator | 0,8 | 1,2 | 1,4 | 2,0 |
| Isocyanat | 44,7 | 44,9 | 45,5 | 47,1 |

Die Angaben in der Tabelle 1 sind als Gewichtsteile der Ausgangstoffe zu verstehen.

Die in dem vorliegenden Ausführungsbeispiel verwendeten Ausgangstoffe sind in der folgenden Tabelle angegeben:

**Tabelle 2**

| | |
|---|---|
| Polyol 1 | Desmophen 7619 |
| Polyol 2 | Bafit VP PU 10WF18 |
| Polyol 3 | Merginol 8364 |
| Katalysator 1 | Triethylendiamin |
| Katalysator 2 | Dimethylethanolamin |
| Katalysator 3 | Bis-2-dimethylaminoethylether |
| Flammschutz | 2,2-Bis(chloromethyl)-1,3propanediyl bis[bis(2chloroethyl)phosphat] |
| Stabilisator | Tegostab B4900 |
| Isocyanat | Desmodur 25BM10 |

Das Polyol 3, für das in diesem Ausführungsbeispiel Merginol 8364 verwendet wird, ist auf Basis eines Pflanzenöls hergestellt. In Versuchen wurde aus den in Tabelle 2 angegebenen Inhaltsstoffen in den Mischungsverhältnissen von Tabelle 1 Polyurethanweichschaumstoff synthetisiert. Anschließend wurden die physikalischen Eigenschaften der sich ergebenden Polyurethanschäume gemessen. Dabei wurde besonders auf den Sitzkomfort bestimmende Größen wie Stauchhärte und Druckverformungsrest geachtet.

Die Ergebnisse dieser Messungen finden sich in der folgenden Tabelle:

**Tabelle 3**

| | | | | **R1** | **R2** | **R3** | **R4** |
|---|---|---|---|---|---|---|---|
| Rohdichte | DIN EN ISO 845 | kg/m³ | | 65 | 65 | 65 | 65 |
| Stauchhärte | DIN EN ISO 3386 | kPa | | 6,0 | 5,5 | 4,5 | 3,0 |
| Zugfestigkeit | DIN EN ISO 1798 | kPa | ≥ | 80 | 80 | 90 | 90 |
| Bruchdehnung | DIN EN ISO 1798 | % | ≥ | 100 | 100 | 110 | 80 |
| Druckverformungsrest | DIN EN ISO 1856 | % | ≤ | 7 | 10 | 15 | 20 |
| Dauerschwingversuch loss in thickness loss in force deflection | DIN EN ISO 3385 | % | ≤ | 5 | 10 | 15 | 17 |
| | | % | ≤ | 12 | 15 | 20 | 22 |

Die Tauglichkeit des Weichschaumstoffs nach den Rezepturen R1 bis R4 als Material zum Einsatz in dem Sitz 10 wurde mit Bezug auf die flammhemmenden Eigenschaften nach verschiedenen Standards getestet. Die Ergebnisse sind in der folgenden Tabelle zusammengefasst:

**Tabelle 4**

| Test | Kriterium | **R1** | **R2** | **R3** | **R4** |
|---|---|---|---|---|---|
| DIN 5510 Teil 2 | S4; SR2, ST2 | + | + | + | + |
| Brandstufe | 2-4 | | + | | |
| CEN TS EN 45545-2:2006 | HL | 1 | 3 | 1 | 1 |
| BS 6853 | Class 1b | | + | | |
| FAR 25 853 a Amdt 25-83 | fulfilled | + | + | + | + |
| FAR 25 853 c Amdt 25-83 | fulfilled | + | + | + | + |

Beim Betrachten der Tabelle 4 ist zu beachten, dass die Ergebnisse hinsichtlich der Brandschutzstufe für die Tests CEN TS EN 45545-2:2006 und BS 6853 von der Raumform des Schaumstoffs sowie davon abhängen, dass der Schaumstoff mit verifizierten weiteren Materialien eingesetzt wird.

Die Rezeptur R2 erfüllt die Anforderungen aller getesteten Normen. Zum Einsatz in einem Flugzeug sind allerdings alle vier Rezepturen geeignet, da sie die FAR-Tests bestehen.

Zur Polymerisation taugliche Polyole können aus Pflanzenöl gewonnen werden. Die Beimischung von Polyolen aus Pflanzenöl lässt eine ökologisch günstige Polyurethansynthese zu. Der Anteil an Pflanzenöl liegt, bezogen auf das Polyol, bei den oben angegebenen Rezepturen im Bereich zwischen ca. 10 Gew.-% und 100 Gew.-%.

Pflanzen, die sich besonders gut zur Erzeugung von Polyolen eignen, sind vor allem Sonnenblumen, Soja und Raps. Diese Pflanzen sind auf dem Weltmarkt einfach erhältlich und ihre Verfügbarkeit ist - anders als bei zum Beispiel Erdöl - durch intensiven Anbau weltweit gesichert.

Aus den oben genannten Ausgangstoffen gebildete Schaumstoffe sind umweltgerecht, kostengünstig und einfach herzustellen und tragen damit sowohl ökologischen als auch ökonomischen Anforderungen Rechnung.

### Bezugszeichenliste

- 10: Sitz
- 11: Gestell
- 12: Rückenteil
- 13: Sitzteil
- 14a: Seitenteil
- 14b: Seitenteil
- 15: Auflagerfläche
- 16: Auflagefläche
- 17: Rückenabschnitt
- 18: Kopfstütze
- 19: Befestigungsabschnitt
- 20: Polsterkern
- 21: Bezug
- 22: Noppenstruktur

## Patentansprüche

1. Flammhemmender Sitz, insbesondere Fluggastsitz, mit einem Rückenteil (12) und
einem Sitzteil (13),
wobei das Rückenteil (12) und/oder das Sitzteil (13) eine Komponente (20) aus einem Weichschaumstoff aufweisen;
**dadurch gekennzeichnet, dass** der Weichschaumstoff aus einem Reaktionsgemisch geschäumt ist, das umfasst:
ca. 100 Gewichtsteile eines Polyolgemisches, das umfasst:
ca. 20 Gewichtsteile eines ersten Polyols ca. 70 Gewichtsteile eines zweiten Polyols und ca. 10 Gewichtsteile eines dritten Polyols,
ca. 3,2 Gewichtsteile Wasser,
ca. 1,6 Gewichtsteile eines Katalysatorgemisches, das umfasst:
ca. 0.3 Gewichtsteile eines ersten Katalysators. ca. 0.8 Gewichtsteile eines zweiten Katalysators und ca. 0.5 Gewichtsteile eines dritten Katalysators ca. 5 Gewichtsteile eines flammhemmenden Mittels,
ca. 35 Gewichtsteile Blähgraphit,
ca. 0,8 Gewichtsteile Stabilisator und
ca. 44,7 Gewichtsteile Isocyanat;
wobei das Polyol einen Anteil an Pflanzenöl aufweist, der zwischen ca. 1 Gew.-% und 100 Gew.-% beträgt und
wobei das Pflanzenöl aus nachwachsenden Rohstoffen aus folgender Gruppe gewonnen ist: Raps, Sonnenblumen, Soja, Reis oder Weizen.

2. Flammhemmender Sitz, insbesondere Fluggastsitz, mit einem Rückenteil (12) und
einem Sitzteil (13),
wobei das Rückenteil (12) und/oder das Sitzteil (13) eine Komponente (20) aus einem Weichschaumstoff aufweisen;
**dadurch gekennzeichnet, dass** der Weichschaumstoff aus einem Reaktionsgemisch geschäumt ist, das umfasst:
ca. 100 Gewichtsteile eines Polyolgemisches, das umfasst:
ca. 20 Gewichtsteile eines ersten Polyols, ca. 60 Gewichtsteile eines zweiten Polyols und ca. 20 Gewichtsteile eines dritten Polyols,
ca. 3,2 Gewichtsteile Wasser,
ca. 1,6 Gewichtsteile eines Katalysatorgemisches, das umfasst:
ca. 0.3 Gewichtsteile eines ersten Katalysators, ca. 0,8 Gewichtsteile eines zweiten Katalysators und ca. 0.5 Gewichtsteile eines dritten Katalysators,
ca. 5 Gewichtsteile eines flammhemmenden Mittels,
ca. 45 Gewichtsteile Blähgraphit,
ca. 1,2 Gewichtsteile Stabilisator und
ca. 44,9 Gewichtsteile Isocyanat;
wobei das Polyol einen Anteil an Pflanzenöl aufweist, der zwischen ca. 1 Gew.-% und 100 Gew.-% beträgt und
wobei das Pflanzenöl aus nachwachsenden Rohstoffen aus folgender Gruppe gewonnen ist: Raps, Sonnenblumen, Soja, Reis oder Weizen.

3. Flammhemmender Sitz, insbesondere Fluggastsitz, mit einem Rückenteil (12) und
einem Sitzteil (13),
wobei das Rückenteil (12) und/oder das Sitzteil (13) eine Komponente (20) aus einem Weichschaumstoff aufweisen;
**dadurch gekennzeichnet, dass** der Weichschaumstoff aus einem Reaktionsgemisch geschäumt ist, das
umfasst:
ca. 100 Gewichtsteile eines Polyolgemisches, das umfasst:
ca. 20 Gewichtsteile eines ersten Polyols. ca. 20 Gewichtsteile eines zweiten Polyols und ca. 60 Gewichtsteile eines dritten Polyols,
ca. 3,2 Gewichtsteile Wasser,
ca. 1,6 Gewichtsteile eines Katalysatorgemisches, das umfasst:
ca. 0,3 Gewichtsteile eines ersten Katalysators, ca. 0,8 Gewichtsteile eines zweiten Katalysators und ca. 0,5 Gewichtsteile eines dritten Katalysators,
ca. 5 Gewichtsteile eines flammhemmenden Mittels,
ca. 35 Gewichtsteile Blähgraphit,
ca. 1,4 Gewichtsteile Stabilisator und
ca. 45,5 Gewichtsteile Isocyanat;
wobei das Polyol einen Anteil an Pflanzenöl aufweist, der zwischen ca. 1 Gew.-% und 100 Gew.-% beträgt und
wobei das Pflanzenöl aus nachwachsenden Rohstoffen aus folgender Gruppe gewonnen ist: Raps, Sonnenblumen, Soja, Reis oder Weizen.

4. Flammhemmender Sitz, insbesondere Fluggastsitz, mit einem Rückenteil (12) und
einem Sitzteil (13),
**dadurch gekennzeichnet, dass** das Rückenteil (12) und/oder das Sitzteil (13) eine Komponente (20) aus
einem Weichschaumstoff aufweisen;
wobei der Weichschaumstoff aus einem Reaktionsgemisch geschäumt ist, das umfasst:
ca. 100 Gewichtsteile eines Polyols,
ca. 3,2 Gewichtsteile Wasser,
ca. 1,9 Gewichtsteile eines Katalysatorgemisches, das umfasst:
ca. 0,4 Gewichtsteile eines ersten Katalysators. ca. 0,8 Gewichtsteile eines
zweiten Katalysators und ca. 0.7 Gewichtsteile eines dritten Katalysators,
ca. 5 Gewichtsteile eines flammhemmenden Mittels,
ca. 35 Gewichtsteile Blähgraphit,
ca. 2,0 Gewichtsteile Stabilisator und
ca. 47,1 Gewichtsteile Isocyanat;
wobei das Polyol einen Anteil an Pflanzenöl aufweist, der zwischen ca. 1 Gew.-% und 100 Gew.-% beträgt und
wobei das Pflanzenöl aus nachwachsenden Rohstoffen aus folgender Gruppe gewonnen ist: Raps, Sonnenblumen, Soja, Reis oder Weizen.

5. Sitz nach einem der Ansprüche 1 bis 4, **dadurch gekennzeichnet, dass** der Anteil an Pflanzenöl in dem Polyol zwischen ca. 1 Gew.-% und 50 Gew.-%, vorzugsweise zwischen ca. 1 Gew.-% und 35 Gew.-%, beträgt.

6. Sitz nach einem der Ansprüche 1 bis 5, **dadurch gekennzeichnet, dass** der Weichschaumstoff ein Raumgewicht hat, das zwischen ca. 20 kg/m3 und 80 kg/m3, vorzugsweise zwischen ca. 40 kg/m³ und 60 kglm3, beträgt.

7. Sitz nach einem der Ansprüche 1 bis 6, **dadurch gekennzeichnet, dass** der Weichschaumstoff eine Stauchhärte nach DIN EN ISO 3386 hat, die zwischen ca. 2 kPa und 10 kPa, vorzugsweise zwischen ca. 4 kPa und 7 kPa beträgt.

8. Sitz nach einem der Ansprüche 1 bis 7, **dadurch gekennzeichnet, dass** der Weichschaumstoff ein Formschaum ist.

9. Sitz nach einem der Ansprüche 1 bis 8, **dadurch gekennzeichnet, dass** die aus Weichschaumstoff bestehende Komponente ein Polsterkern (20) ist.

10. Verfahren zum Herstellen eines flammhemmenden Sitzes, insbesondere Fluggastsitz, der ein Rückenteil (12) und ein Sitzteil (13) aufweist, wobei das Rückenteil(12) und/oder das Sitzteil (13) eine Komponente (20) aus einem Weichschaumstoff aufweisen, mit folgenden Verfahrensschritten:
der Weichschaumstoff wird aus einem Reaktionsgemisch geschäumt, das umfasst:
ca. 100 Gewichtsteile eines Polyolgemisches, das umfasst:
ca. 20 Gewichtsteile eines ersten Polyols. ca. 70 Gewichtsteile eines zweiten Polyols und ca. 10 Gewichtsteile eines dritten Polyols.
ca. 3,2 Gewichtsteile Wasser,
ca. 1,6 Gewichtsteile eines Katalysatorgemisches, das umfasst:
ca. 0.3 Gewichtsteile eines ersten Katalysators. ca. 0,8 Gewichtsteile eines zweiten Katalysators und ca. 0.5 Gewichtsteile eines dritten Katalysators,
ca. 5 Gewichtsteile eines flammhemmenden Mittels,
ca. 35 Gewichtsteile Blähgraphit,
ca. 0,8 Gewichtsteile Stabilisator und
ca. 44,7 Gewichtsteile Isocyanat;
wobei ein Polyol verwendet wird, das einen Anteil an Pflanzenöl aufweist, der zwischen ca. 1 Gew.-% und 100 Gew.-% beträgt und
wobei das Pflanzenöl aus nachwachsenden Rohstoffen aus folgender Gruppe gewonnen wird: Raps, Sonnenblumen, Soja, Reis oder Weizen.

11. Verfahren zum Herstellen eines flammhemmenden Sitzes, insbesondere Fluggastsitz, der ein Rückenteil (12) und ein Sitzteil (13) aufweist, wobei das Rückenteil (12) und/oder das Sitzteil (13) eine Komponente (20) aus einem Weichschaumstoff aufweisen, mit folgenden Verfahrensschritten:
der Weichschaumstoff wird aus einem Reaktionsgemisch geschäumt, das umfasst:
ca. 100 Gewichtsteile eines Polyolgemisches, das umfasst:
ca. 20 Gewichtsteile eines ersten Polyols. ca. 60 Gewichtsteile eines zweiten Polyols und ca. 20 Gewichtsteile eines dritten Polyols,
ca. 3,2 Gewichtsteile Wasser,
ca. 1,6 Gewichtsteile eines Katalysatorgemisches, das umfasst:
ca. 0.3 Gewichtsteile eines ersten Katalysators, ca. 0.8 Gewichtsteile eines zweiten Katalysators und ca. 0.5 Gewichtsteile eines dritten Katalysators,
ca. 5 Gewichtsteile eines flammhemmenden Mittels,
ca. 45 Gewichtsteile Blähgraphit,
ca. 1,2 Gewichtsteile Stabilisator und
ca. 44,9 Gewichtsteile Isocyanat;
wobei ein Polyol verwendet wird, das einen Anteil an Pflanzenöl aufweist, der zwischen ca. 1 Gew.-% und 100 Gew.-% beträgt und
wobei das Pflanzenöl aus nachwachsenden Rohstoffen aus folgender Gruppe gewonnen wird: Raps, Sonnenblumen, Soja, Reis oder Weizen.

12. Verfahren zum Herstellen eines flammhemmenden Sitzes, insbesondere Fluggastsitz, der ein Rückenteil (12) und ein Sitzteil (13) aufweist, wobei das Rückenteil (12) und/oder das Sitzteil (13) eine Komponente (20) aus einem Weichschaumstoff aufweisen, mit folgenden Verfahrensschritten:
der Weichschaumstoff wird aus einem Reaktionsgemisch geschäumt, das umfasst:
ca. 100 Gewichtsteile eines Polyolgemisches, das umfasst:
ca. 20 Gewichtsteile eines ersten Polyols. ca. 20 Gewichtsteile eines zweiten Polyols und ca. 60 Gewichtsteile eines dritten Polyols,
ca. 3,2 Gewichtsteile Wasser,
ca. 1,6 Gewichtsteile eines Katalysatorgemisches, das umfasst:
ca. 0,3 Gewichtsteile eines ersten Katalysators. ca. 0,8 Gewichtsteile eines zweiten Katalysators und ca. 0.5 Gewichtsteile eines dritten Katalysators ,
ca. 5 Gewichtsteile eines flammhemmenden Mittels,
ca. 35 Gewichtsteile Blähgraphit,
ca. 1,4 Gewichtsteile Stabilisator und
ca. 45 5 Gewichtsteile Isocyanat;
wobei ein Polyol verwendet wird, das einen Anteil an Pflanzenöl aufweist, der zwischen ca. 1 Gew.-% und 100 Gew.-% beträgt und
wobei das Pflanzenöl aus nachwachsenden Rohstoffen aus folgender Gruppe gewonnen wird: Raps, Sonnenblumen, Soja, Reis oder Weizen.

13. Verfahren zum Herstellen eines flammhemmenden Sitzes, insbesondere Fluggastsitz, der ein Rückenteil (12) und ein Sitzteil (13) aufweist, wobei das Rückenteil (12) und/oder das Sitzteil (13) eine Komponente (20) aus einem Weichschaumstoff aufweisen, mit folgenden Verfahrensschritten:
der Weichschaumstoff wird aus einem Reaktionsgemisch geschäumt, das umfasst:
ca. 100 Gewichtsteile eines Polyols,
ca. 3,2 Gewichtsteile Wasser,
ca. 1,9 Gewichtsteile eines Katalysatorgemisches, das umfasst:
ca. 0,4 Gewichtsteile eines ersten Katalysators. ca. 0.8 Gewichtsteile eines zweiten Katalysators und ca. 0,7 Gewichtsteile eines dritten Katalysators,
ca. 5 Gewichtsteile eines flammhemmenden Mittels,
ca. 35 Gewichtsteile Blähgraphit,
ca. 2,0 Gewichtsteile Stabilisator und
ca. 47,1 Gewichtsteile Isocyanat;
wobei ein Polyol verwendet wird, das einen Anteil an Pflanzenöl aufweist, der zwischen ca. 1 Gew.-% und 100 Gew.-% beträgt und
wobei das Pflanzenöl aus nachwachsenden Rohstoffen aus folgender Gruppe gewonnen wird: Raps, Sonnenblumen, Soja, Reis oder Weizen.

14. Verfahren nach einem der Ansprüche 10 bis 13, **dadurch gekennzeichnet, dass** ein Polyol mit einem Anteil an Pflanzenöl verwendet wird, der zwischen ca. 1 Gew.-% und 50 Gew.-%, vorzugsweise zwischen ca. 1 Gew.-% und 35 Gew.-%, beträgt.

## Claims

1. Flame retardant seat, in particular an airline-passenger seat, with
a back rest (12) and
a seat part (13),
wherein the back rest (12) and/or the seat part (13) have one component (20) of a soft foam material;
**characterised in that** the soft foam material is produced from a reaction mixture comprising:
approx. 100 parts by weight of a polyol mixture consisting of approx. 20 parts by weight of a first polyol, approx. 70 parts by weight of a second polyol and approx. 10 parts by weight of a third polyol,
approx 3.2 parts by weight of water,
approx. 1.6 parts by weight of a catalyst mixture consisting of approx. 0.3 parts by weight of a first catalyst, approx. 0.8 parts by weight of a second catalyst and approx. 0.5 parts by weight of a third catalyst,
approx. 5 parts by weight of a fire-retarding substance,
approx. 35 parts by weight of expanded graphite,
approx. 0.8 parts by weight of a stabiliser and
approx. 44.7 parts by weight of isocyanate;
wherein the polyol is made up in part of vegetable oil, said part being between approx. 1 % by weight and 100 % by weight and
wherein the vegetable oil is extracted from renewable raw materials from the following group: rapeseed, sunflower, soya, rice or wheat.

2. Flame retardant seat, in particular an airline-passenger seat, with
a back rest (12) and
a seat part (13),
wherein the back rest (12) and/or the seat part (13) have one component (20) of a soft foam material;
**characterised in that** the soft foam material is produced from a reaction mixture comprising:
approx. 100 parts by weight of a polyol mixture consisting of approx 20 parts by weight of a first polyol, approx. 60 parts by weight of a second polyol and approx. 20 parts by weight of a third polyol,
approx. 3.2 parts by weight of water,
approx. 1.6 parts by weight of a catalyst mixture consisting of approx. 0.3 parts by weight of a first catalyst, approx. 0.8 parts by weight of a second catalyst and approx. 0.5 parts by weight of a third catalyst,
approx. 5 parts by weight of a fire-retarding substance,
approx. 45 parts by weight of expanded graphite,
approx. 1.2 parts by weight of a stabiliser and
approx. 44.9 parts by weight of isocyanate;
wherein the polyol is made up in part of vegetable oil, said part being between approx. 1 % by weight and 100 % by weight and
wherein the vegetable oil is extracted from renewable raw materials from the following group: rapeseed, sunflower, soya, rice or wheat.

3. Flame retardant seat, in particular an airline-passenger seat, with
a back rest (12) and
a seat part (13),
wherein the back rest (12) and/or the seat part (13) have one component (20) of a soft foam material;
**characterised in that** the soft foam material is produced from a reaction mixture comprising:
approx. 100 parts by weight of a polyol mixture consisting of approx 20 parts by weight of a first polyol, approx. 20 parts by weight of a second polyol and approx. 60 parts by weight of a third polyol,
approx. 3.2 parts by weight of water,
approx. 1.6 parts by weight of a catalyst mixture consisting of approx. 0.3 parts by weight of a first catalyst, approx. 0.8 parts by weight of a second catalyst and approx. 0.5 parts by weight of a third catalyst,
approx. 5 parts by weight of a fire-retarding substance,
approx. 35 parts by weight of expanded graphite,
approx. 1.4 parts by weight of a stabiliser and
approx. 45.5 parts by weight of isocyanate;
wherein the polyol is made up in part of vegetable oil, said part being between approx. 1 % by weight and 100 % by weight and
wherein the vegetable oil is extracted from renewable raw materials from the following group: rapeseed, sunflower, soya, rice or wheat.

4. Flame retardant seat, in particular an airline-passenger seat, with
a back rest (12) and
a seat part (13),
wherein the back rest (12) and/or the seat part (13) have one component (20) of a soft foam material;
**characterised in that** the soft foam material is produced from a reaction mixture comprising:
approx. 100 parts by weight of a polyol mixture,
approx. 3.2 parts by weight of water,
approx. 1.9 parts by weight of a catalyst mixture consisting of approx. 0.4 parts by weight of a first catalyst, approx. 0.8 parts by weight of a second catalyst and approx. 0.7 parts by weight of a third catalyst,
approx. 5 parts by weight of a fire-retarding substance,
approx. 35 parts by weight of expanded graphite,
approx. 2.0 parts by weight of a stabiliser and
approx. 47.1 parts by weight of isocyanate;
wherein the polyol is made up in part of vegetable oil, said part being between approx. 1 % by weight and 100 % by weight and
wherein the vegetable oil is extracted from renewable raw materials from the following group: rapeseed, sunflower, soya, rice or wheat.

5. Seat according to one of the claims 1 to 4 **characterised in that** the part of vegetable oil in the polyol is between approx. 1 % by weight and 50 % by weight, preferably between approx. 1 % by weight and 35 % by weight.

6. Seat according to one of the claims 1 to 5 **characterised in that** the soft foam material has a density of between approx. 20 kg/cbm and 80 kg/cbm, preferably between approx. 40 kg/cbm and 60 kg/cbm.

7. Seat according to one of the claims 1 to 6 **characterised in that** the soft foam material has a compression hardness in accordance with DIN EN ISO 3386, which is between approx. 2 kPa and 10 kPa, preferably between approx. 4 kPa and 7 kPa.

8. Seat according to one of the claims 1 to 7 **characterised in that** the soft foam material is a moulded foam.

9. Seat according to one of the claims 1 to 8 **characterised in that** the component consisting of soft foam material is an upholstery core (20).

10. Method for producing a flame-resistant seat, in particular for an airline passenger, having a back rest (12) and a seat part (13) wherein the back rest (12) and/or the seat part (13) have one component (20) of a soft foam material, with the following steps:
the soft foam material is produced from a reaction mixture comprising:
approx. 100 parts by weight of a polyol mixture consisting of approx 20 parts by weight of a first polyol, approx. 70 parts by weight of a second polyol and approx. 10 parts by weight of a third polyol,
approx. 3.2 parts by weight of water,
approx. 1.6 parts by weight of a catalyst mixture consisting of approx. 0.3 parts by weight of a first catalyst, approx. 0.8 parts by weight of a second catalyst and approx. 0.5 parts by weight of a third catalyst,
approx. 5 parts by weight of a fire-retarding substance,
approx. 35 parts by weight of expanded graphite,
approx. 0.8 parts by weight of a stabiliser and
approx. 44.7 parts by weight of isocyanate;
wherein the polyol is made up in part of vegetable oil, said part being between approx. 1 % by weight and 100 % by weight and
wherein the vegetable oil is extracted from renewable raw materials from the following group: rapeseed, sunflower, soya, rice or wheat.

11. Method for producing a flame-resistant seat, in particular for an airline passenger, having a back rest (12) and a seat part (13) wherein the back rest (12) and/or the seat part (13) have one component (20) of a soft foam material, with the following steps:
the soft foam material is produced from a reaction mixture comprising:
approx. 100 parts by weight of a polyol mixture consisting of approx 20 parts by weight of a first polyol, approx. 60 parts by weight of a second polyol and approx. 20 parts by weight of a third polyol,
approx. 3.2 parts by weight of water,
approx. 1.6 parts by weight of a catalyst mixture consisting of approx. 0.3 parts by weight of a first catalyst, approx. 0.8 parts by weight of a second catalyst and approx. 0.5 parts by weight of a third catalyst,
approx. 5 parts by weight of a fire-retarding substance,
approx. 45 parts by weight of expanded graphite,
approx. 1.2 parts by weight of a stabiliser and
approx. 44.9 parts by weight of isocyanate;
wherein the polyol is made up in part of vegetable oil, said part being between approx. 1 % by weight and 100 % by weight and
wherein the vegetable oil is extracted from renewable raw materials from the following group: rapeseed, sunflower, soya, rice or wheat.

12. Method for producing a flame-resistant seat, in particular for an airline passenger, having a back rest (12) and a seat part (13) wherein the back rest (12) and/or the seat part (13) have one component (20) of a soft foam material, with the following steps:
the soft foam material is produced from a reaction mixture comprising:
approx. 100 parts by weight of a polyol mixture consisting approx 20 parts by weight of a first polyol, approx. 20 parts by weight of a second polyol and approx. 60 parts by weight of a third polyol,
approx. 3.2 parts by weight of water,
approx. 1.6 parts by weight of a catalyst mixture consisting of approx. 0.3 parts by weight of a first catalyst, approx. 0.8 parts by weight of a second catalyst and approx. 0.5 parts by weight of a third catalyst,
approx. 5 parts by weight of a fire-retarding substance,
approx. 35 parts by weight of expanded graphite,
approx. 1.4 parts by weight of a stabiliser and
approx. 45.5 parts by weight of isocyanate;
wherein the polyol is made up in part of vegetable oil, said part being between approx. 1 % by weight and 100 % by weight and
wherein the vegetable oil is extracted from renewable raw materials from the following group: rapeseed, sunflower, soya, rice or wheat.

13. Method for producing a flame-resistant seat, in particular for an airline passenger, having a back rest (12) and a seat part (13) wherein the back rest (12) and/or the seat part (13) have one component (20) of a soft foam material, with the following steps:
the soft foam material is produced from a reaction mixture comprising:
approx. 100 parts by weight of a polyol mixture,
approx. 3.2 parts by weight of water,
approx. 1.9 parts by weight of a catalyst mixture consisting of approx. 0.4 parts by weight of a first catalyst, approx. 0.8 parts by weight of a second catalyst and approx. 0.7 parts by weight of a third catalyst,
approx. 5 parts by weight of a fire-retarding substance,
approx. 35 parts by weight of expanded graphite,
approx. 2.0 parts by weight of a stabiliser and
approx. 47.1 parts by weight of isocyanate;
wherein the polyol is made up in part of vegetable oil, said part being between approx. 1 % by weight and 100 % by weight and
wherein the vegetable oil is extracted from renewable raw materials from the following group: rapeseed, sunflower, soya, rice or wheat.

14. Method according to one of the claims 10 to 13 **characterised in that** a polyol is used consisting of a proportion of vegetable oil between approx. 1 % by weight and 50 % by weight, preferably between approx. 1 % by weight and 35 % by weight.

## Revendications

1. Siège ignifugé, en particulier siège de passager d'avion, comprenant une partie formant dossier (12) et
une partie formant assise (13),
telles que la partie formant dossier (12) et/ou la partie formant assise (13) comprennent un composant (20) en mousse souple ;
**caractérisé en ce que** la mousse souple est amenée à mousser à partir d'un mélange de réaction qui comprend :
environ 100 parties en poids d'un mélange de polyols qui comprend :
environ 20 parties en poids d'un premier polyol, environ 70 parties en poids d'un second polyol, et environ 10 parties en poids d'un troisième polyol,
environ 3,2 parties en poids d'eau,
environ 1,6 parties en poids d'un mélange catalyseur qui comprend :
environ 0,3 parties en poids d'un premier catalyseur, environ 0,8 parties en poids d'un second catalyseur et environ 0,5 parties en poids d'un troisième catalyseur,
environ 5 parties en poids d'un agent ignifuge,
environ 35 parties en poids de graphite expansé,
environ 0,5 parties en poids de stabilisateur et
environ 44,7 parties en poids d'isocyanate ;
dans lequel le polyol comprend une proportion d'huile végétale, qui est comprise entre 1 % en poids et 100 % en poids, et
dans lequel l'huile végétale est obtenue à partir de ressources renouvelables parmi le groupe suivant : colza, tournesol, soja, riz ou blé.

2. Siège ignifugé, en particulier siège de passager d'avion, comprenant une partie formant dossier (12) et
une partie formant assise (13), tel que la partie formant dossier (12) et/ou la partie formant assise (13) comprennent un composant (20) en mousse souple;
**caractérisé en ce que** la mousse souple est amenée à mousser à partir d'un mélange de réaction qui comprend :
environ 100 parties en poids d'un mélange de polyols qui comprend :
environ 20 parties en poids d'un premier polyol, environ 60 parties en poids d'un second polyol, et environ 20 parties en poids d'un troisième polyol,
environ 3,2 parties en poids d'eau,
environ 1,6 parties en poids d'un mélange catalyseur qui comprend :
environ 0,3 parties en poids d'un premier catalyseur, environ 0,8 parties en poids d'un second catalyseur et environ 0,5 parties en poids d'un troisième catalyseur,
environ 5 parties en poids d'un agent ignifuge,
environ 45 parties en poids de graphite expansé,
environ 1,2 parties en poids de stabilisateur et
environ 44,9 parties en poids d'isocyanate;
dans lequel le polyol comprend une proportion d'huile végétale, qui est comprise entre 1 % en poids et 100 % en poids, et
dans lequel l'huile végétale est obtenue à partir de ressources renouvelables parmi le groupe suivant: colza, tournesol, soja, riz ou blé.

3. Siège ignifugé, en particulier siège de passager d'avion, comprenant une partie formant dossier (12) et
une partie formant assise (13), tel que la partie formant dossier (12) et/ou la partie formant assise (13) comprennent un composant (20) en mousse souple;
**caractérisé en ce que** la mousse souple est amenée à mousser à partir d'un mélange de réaction qui comprend :
environ 100 parties en poids d'un mélange de polyols qui comprend:
environ 20 parties en poids d'un premier polyol, environ 20 parties en poids d'un second polyol, et environ 60 parties en poids d'un troisième polyol,
environ 3,2 parties en poids d'eau,
environ 1,6 parties en poids d'un mélange catalyseur qui comprend:
environ 0,3 parties en poids d'un premier catalyseur, environ 0,8 parties en poids d'un second catalyseur et environ 0,5 parties en poids d'un troisième catalyseur,
environ 5 parties en poids d'un agent ignifuge,
environ 35 parties en poids de graphite expansé,
environ 1,4 parties en poids de stabilisateur et
environ 45,5 parties en poids d'isocyanate ;
dans lequel le polyol comprend une proportion d'huile végétale, qui est comprise entre 1 % en poids et 100 % en poids, et
dans lequel l'huile végétale est obtenue à partir de ressources renouvelables parmi le groupe suivant : colza, tournesol, soja, riz ou blé.

4. Siège ignifugé, en particulier siège de passager d'avion, comprenant une partie formant dossier (12) et
une partie formant assise (13), tel que la partie formant dossier (12) et/ou la partie formant assise (13) comprennent un composant (20) en mousse souple ;
**caractérisé en ce que** la mousse souple est amenée à mousser à partir d'un mélange de réaction qui comprend :
environ 100 parties en poids d'un polyol,
environ 3,2 parties en poids d'eau,
environ 1,9 parties en poids d'un mélange catalyseur qui comprend :
environ 0,4 parties en poids d'un premier catalyseur, environ 0,8 parties
en poids d'un second catalyseur et environ 0,7 parties en poids d'un troisième catalyseur,
environ 5 parties en poids d'un agent ignifuge,
environ 35 parties en poids de graphite expansé,
environ 2,0 parties en poids de stabilisateur et
environ 47,1 parties en poids d'isocyanate ;
dans lequel le polyol comprend une proportion d'huile végétale, qui est comprise entre 1 % en poids et 100 % en poids, et
dans lequel l'huile végétale est obtenue à partir de ressources renouvelables parmi le groupe suivant : colza, tournesol, soja, riz ou blé.

5. Siège selon l'une des revendications 1 à 4, **caractérisé en ce que** la proportion d'huile végétale dans le polyol s'élève entre environ 1 % en poids et 50 % en poids, de préférence entre environ 1 % en poids et 35 % en poids.

6. Siège selon l'une des revendications 1 à 5, **caractérisé en ce que** la mousse souple présente une densité pondérale qui est entre environ 20 kg/m³ et 80 kg/m³, de préférence entre environ 40 kg/m³ et 60 kg/m³.

7. Siège selon l'une des revendications 1 à 6, **caractérisé en ce que** la mousse souple présente une dureté d'après la norme DIN EN IFO 3386, qui s'élève entre environ 2 kPa et 10 kPa, de préférence entre environ 4 kPa et 7 kPa.

8. Siège selon l'une des revendications 1 à 7, **caractérisé en ce que** la mousse souple est une mousse moulée.

9. Siège selon l'une des revendications 1 à 8, **caractérisé en ce que** le composant constitué en mousse souple est un noyau de rembourrage (20).

10. Procédé pour fabriquer un siège ignifugé, en particulier siège de passager d'avion, qui comprend une partie formant dossier (12) et une partie formant assise (13), telles que la partie formant dossier (12) et/ou la partie formant assise (13) comprennent un composant (20) en mousse souple, avec les étapes de procédé suivantes :
la mousse souple est amenée à mousser à partir d'un mélange de réaction qui comprend :
environ 100 parties en poids d'un mélange de polyols qui comprend :
environ 20 parties en poids d'un premier polyol, environ 70 parties en poids d'un second polyol, et environ 10 parties en poids d'un troisième polyol,
environ 3,2 parties en poids d'eau,
environ 1,6 parties en poids d'un mélange catalyseur qui comprend :
environ 0,3 parties en poids d'un premier catalyseur, environ 0,8 parties en poids d'un second catalyseur et environ 0,5 parties en poids d'un troisième catalyseur,
environ 5 parties en poids d'un agent ignifuge,
environ 35 parties en poids de graphite expansé,
environ 0,5 parties en poids de stabilisateur et
environ 44,7 parties en poids d'isocyanate ;
dans lequel on utilise un polyol qui comprend une proportion d'huile végétale, qui est comprise entre 1 % en poids et 100 % en poids, et
dans lequel l'huile végétale est obtenue à partir de ressources renouvelables parmi le groupe suivant : colza, tournesol, soja, riz ou blé.

11. Procédé pour fabriquer un siège ignifugé, en particulier siège de passager d'avion, qui comprend une partie formant dossier (12) et une partie formant assise (13), telles que la partie formant dossier (12) et/ou la partie formant assise (13) comprennent un composant (20) en mousse souple, avec les étapes de procédé suivantes :
la mousse souple est amenée à mousser à partir d'un mélange de réaction qui comprend :
environ 100 parties en poids d'un mélange de polyols qui comprend :
environ 20 parties en poids d'un premier polyol, environ 60 parties en poids d'un second polyol, et environ 20 parties en poids d'un troisième polyol,
environ 3,2 parties en poids d'eau,
environ 1,6 parties en poids d'un mélange catalyseur qui comprend :
environ 0,3 parties en poids d'un premier catalyseur, environ 0,8 parties en poids d'un second catalyseur et environ 0,5 parties en poids d'un troisième catalyseur,
environ 5 parties en poids d'un agent ignifuge,
environ 45 parties en poids de graphite expansé,
environ 1,2 parties en poids de stabilisateur et
environ 44,9 parties en poids d'isocyanate ;
dans lequel on utilise un polyol qui comprend une proportion d'huile végétale, qui est comprise entre 1 % en poids et 100 % en poids, et
dans lequel l'huile végétale est obtenue à partir de ressources renouvelables parmi le groupe suivant : colza, tournesol, soja, riz ou blé.

12. Procédé pour fabriquer un siège ignifugé, en particulier siège de passager d'avion, qui comprend une partie formant dossier (12) et une partie formant assise (13), telles que la partie formant dossier (12) et/ou la partie formant assise (13) comprennent un composant (20) en mousse souple, avec les étapes de procédé suivantes :
la mousse souple est amenée à mousser à partir d'un mélange de réaction qui comprend :
environ 100 parties en poids d'un mélange de polyols qui comprend :
environ 20 parties en poids d'un premier polyol, environ 20 parties en poids d'un second polyol, et environ 60 parties en poids d'un troisième polyol,
environ 3,2 parties en poids d'eau,
environ 1,6 parties en poids d'un mélange catalyseur qui comprend :
environ 0,3 parties en poids d'un premier catalyseur, environ 0,8 parties en poids d'un second catalyseur et environ 0,5 parties en poids d'un troisième catalyseur,
environ 5 parties en poids d'un agent ignifuge,
environ 35 parties en poids de graphite expansé,
environ 1,4 parties en poids de stabilisateur et
environ 45,5 parties en poids d'isocyanate ;
dans lequel on utilise un polyol qui comprend une proportion d'huile végétale, qui est comprise entre 1 % en poids et 100 % en poids, et
dans lequel l'huile végétale est obtenue à partir de ressources renouvelables parmi le groupe suivant : colza, tournesol, soja, riz ou blé.

13. Procédé pour fabriquer un siège ignifugé, en particulier siège de passager d'avion, qui comprend une partie formant dossier (12) et une partie formant assise (13), telles que la partie formant dossier (12) et/ou la partie formant assise (13) comprennent un composant (20) en mousse souple, avec les étapes de procédé suivantes :
la mousse souple est amenée à mousser à partir d'un mélange de réaction qui comprend :
environ 100 parties en poids d'un polyol,
environ 3,2 parties en poids d'eau,
environ 1,9 parties en poids d'un mélange catalyseur qui comprend :
environ 0,4 parties en poids d'un premier catalyseur, environ 0,8 parties en poids d'un second catalyseur et environ 0,7 parties en poids d'un troisième catalyseur,
environ 5 parties en poids d'un agent ignifuge,
environ 35 parties en poids de graphite expansé,
environ 2,0 parties en poids de stabilisateur et
environ 47,1 parties en poids d'isocyanate ;
dans lequel on utilise un polyol qui comprend une proportion d'huile végétale, qui est comprise entre 1 % en poids et 100 % en poids, et
dans lequel l'huile végétale est obtenue à partir de ressources renouvelables parmi le groupe suivant : colza, tournesol, soja, riz ou blé.

14. Procédé selon l'une des revendications 10 à 13, **caractérisé en ce que** l'on utilise un polyol avec une proportion d'huile végétale qui s'élève entre environ 1 % en poids et 50 % en poids, de préférence entre environ 1 % en poids et 35 % en poids.
